# EUROPÄISCHE PATENTSCHRIFT

(11) **EP 2 248 770 B1**
(45) Veröffentlichungstag und Bekanntmachung des Hinweises auf die Patenterteilung: **23.09.2015**
(21) Anmeldenummer: 10160124.3
(22) Anmeldetag: 16.04.2010
(51) Int. Cl.: C02F 3/12, E03F 1/00, C02F 1/00, C02F 103/00, C02F 3/32

(54) **Kapillar-Wasserverteiler und dessen Verwendung in Kläranlagen für häusliches Abwasser**
Capillary water distributor and use of same in purification assemblies for domestic waste water
Distributeur d'eau capillaire et son utilisation dans des stations d'épuration pour eaux usées ménagères

(30) Priorität: 16.04.2009 DE 102009017923
(43) Veröffentlichungstag der Anmeldung: 10.11.2010
(73) Patentinhaber: Markgraf, Hannelore, 38459 Mackendorf (DE)
(72) Erfinder: Markgraf, Hannelore, 38459 Mackendorf (DE)
(74) Vertreter: Gulde & Partner

(56) Entgegenhaltungen:
- WO-A1-98/18536
- DE-A1-102005 026 644
- FR-A1- 2 837 196
- JP-A- 55 015 608
- JP-A- 58 131 195
- US-A- 4 824 572
- US-A- 5 921 711
- US-A1- 2003 070 971
- US-A1- 2006 060 523

## Beschreibung

Die Erfindung betrifft eine Kapillar-Anlage sowie dessen Verwendung in Kläranlagen für häusliches Abwasser. Des Weiteren betrifft die Erfindung ein Verfahren zur Abwasser- und/oder Regenwasseraufbereitung, bei dem das Abwasser gesammelt, optional vorgereinigt und dann das vorgereinigte Wasser mittels einer erfindungsgemäßen Kapillar-Anlage gereinigt, verdunstet und/oder als Feuchtigkeit an das Umgebungserdreich abgegeben und/oder zur Pflanzenbewässerung und Brauchwassernutzung eingesetzt wird. Erfindungsgemäß kann dadurch der Vorfluter und/oder eine Vorrichtung zur Versickerung des Klarwassers in Makroporen entfallen, was besonders in Regionen mit sensiblen Gewässern vonnöten ist.

In vielen Regionen herrscht zumindest in der warmen trockenen Jahreszeit Wasserknappheit bei teilweise bedenklich sinkendem Grundwasserspiegel. Ursache hierfür ist oft, dass Wasser im ländlichen Raum dezentral, beispielsweise über Brunnen, entnommen wird, aber nach dessen Benutzung zentral, beispielsweise über Rohrleitungen und Kläranlagen in so genannte Vorfluter abgeführt wird. Eine Nutzung und/oder Versickerung des Wassers vor Ort würde ein unerwünschtes Absinken des Grundwasserspiegels reduzieren und zudem das Hochwasser-Aufkommen am Vorfluter verringern.

Im Bereich der Wasser- bzw. Abwasser-Versickerung und Bodenfiltertechnik sind bisher die horizontalen und vertikalen Bodenfilter bekannt, wo das Wasser horizontal oder vertikal durch das Filtermaterial strömt. Im Bereich der Versickerung von Regenwasser oder gereinigtem Abwasser wird immer vertikal nach unten in Richtung Grundwasser versickert. In sensiblen Regionen, wie Wasserschutzgebieten, Karstgebieten oder in Gebieten mit extrem hohem Grundwasserstand oder bindigen Böden ist eine schnelle Versickerung von gereinigtem Abwasser in Makroporen zum Schutz des Grundwassers nicht sinnvoll.

Die Verwertung des gereinigten Abwassers vor Ort ist allerdings sowohl aus ökologischer als auch aus ökonomischer Sicht besonders vorteilhaft und entspricht den Anforderungen der internationalen Agenda 21, Wasser- und Rohstoffkreisläufe möglichst lokal zu schließen. Gereinigtes Abwasser und/oder Brauchwasser sollte somit zur Neubildung von Grundwasser vor Ort wiederverwertet werden.

Die DE 103 30 369 A1 schlägt daher vor, die Geländeoberkante durch lokale Aufschüttungen soweit zu erhöhen, dass der Grundwasserspiegel dauerhaft tiefer als etwa 1,20 m unter der Geländeoberkante liegt, so dass eine Versickerung wieder möglich ist. Derartige Aufschüttungen stellen allerdings immer einen Eingriff in die Landschaftsgestaltung dar und können daher nicht flächendeckend eingesetzt werden. Zudem ist die Erhöhung des Bodenniveaus sehr materialintensiv und kommt nur in Frage, wenn Bodenüberschüsse, beispielsweise Abraumhalden oder Ähnliches, zur Verfügung stehen.

Die Schrift JP 55015608 A offenbart einen Wasserbehandlungstank, der über eine Verteilungskammer 1 mit einem Behandlungsbehälter 6 verbunden ist. Im Behälter 6 wird das vorbehandelte Wasser über ein perforiertes Rohr 11 in das untere Drittel des Behälters 6, welcher mit wasserdurchlässigen Schichten von Kies und Sand gefüllt ist, eingeleitet. Im oberen Dritte des Behälters 6 ist ein weiteres perforiertes Rohr angeordnet, das oberhalb des Wasserpegels WL in die Verteilungskammer 1 einmündet.

In der Schrift US 2006/060523 A ist einem Faultank 14 und einem aeroben Behandlungstank 16 ein wasserundurchlässiger Behälter 18 nachgeschaltet, der mit Torf gefüllt und nach oben offen ist. Das zu behandelnde Wasser wird aus dem Behandlungstank 16 von unten über das Rohr 34 in den Behälter 18 eingeleitet.

Es ist die Aufgabe der Erfindung, eine Vorrichtung und ein Verfahren zur Verfügung zu stellen, mit dem gereinigtes, hygienisch unbedenkliches Abwasser und/oder Regenwasser ohne schnelle Versickerung in Makroporen dem lokalen Wasserkreislauf zugeführt wird.

Diese Aufgabe wird erfindungsgemäß gelöst durch die Merkmale im kennzeichnenden Teil der Hauptansprüche 1, 12 und 14 im Zusammenwirken mit den Merkmalen im Oberbegriff. Zweckmäßige Ausgestaltungen der Erfindung sind in den Unteransprüchen enthalten.

Die Erfindung betrifft demnach eine Kapillar-Anlage, die mindestens einen Wasservorratsbehälter, mindestens eine wasserundurchlässige Wanne mit einer bestimmten Höhe, mindestens eine Wasserzuführung, die Mittel zur Erzeugung und/oder Aufrechterhaltung eines Wasserzuflusses aus dem mindestens einen Wasservorratsbehälter in die mindestens eine wasserundurchlässige Wanne aufweist, mindestens einen Überlaufschutz, der die mindestens eine wasserundurchlässige Wanne mit dem mindestens einen Wasservorratsbehälter wasserdicht verbindet, und mindestens ein organisches und/oder anorganisches Substrat umfasst, das in der mindestens einen wasserundurchlässigen Wanne angeordnet ist und eine Kapillarwirkung aufweist, wobei die Kapillar-Anlage derart im Erdreichangeordnet werden kann, dass der Wannenboden der Geländeoberkante des Erdreichs gegenüberliegt und der Abstand vom Wannenboden bis zur Geländeoberkante gleichgroß oder größer als die Höhe der wasserundurchlässigen Wanne ist.

Erfindungsgemäß kann jeder beliebige Behälter als Wasservorratsbehälter im Sinne der Erfindung verwendet werden. Beispielhafte Behälter sind aus rostfreiem Stahl oder Kunststoff, wie z.B. Polyethylen (PE), Polypropylene (PP) oder Polytetrafluorethylen (PTFE) gefertigt. Weitere geeignete Materialien für Wasservorratsbehälter sind dem Fachmann bekannt. Der erfindungsgemäße Wasservorratsbehälter kann ein einzelner Behälter sein oder ein Teil einer vorgeschalteten Kläranlage. In einer bevorzugten Ausgestaltung der Erfindung weist der Wasservorratsbehälter Regenwasser und/oder gereinigtes Abwasser bzw. Klarwasser auf.

Erfindungsgemäß umfasst die mindestens eine wasserundurchlässige Wanne einen Wannenboden, eine umlaufende Seitenwand oder mehrere Seitenwände und eine Öffnung, die eine dem Wannenboden gegenüberliegende Fläche darstellt und durch den oberen, d.h. den dem Wannenboden abgewandten Rand der umlaufenden Seitenwand begrenzt ist. Die Höhe der wasserundurchlässigen Wanne erstreckt sich vom Wannenboden bis zur Öffnung. Der Wannenboden kann in jeder beliebigen Form, vorzugsweise rund, elliptisch oder vieleckig ausgestaltet sein. In Abhängigkeit von der Form des Wannenbodens weist die erfindungsgemäße wasserundurchlässige Wanne eine umlaufende oder mehrere aneinander anschließende Seitenwände auf. Sind mehrere Seitenwände vorhanden, so sind diese vorzugsweise gleich hoch. In einer bevorzugten Ausführungsform der Erfindung ist der Winkel zwischen dem Wannenboden und der umlaufenden Seitenwand ein stumpfer Winkel. Dies bedeutet, dass wasserundurchlässige Wannen bevorzugt werden, bei denen die Öffnung der Wanne größer als der Wannenboden ist.

Die erfindungsgemäße wasserundurchlässige Wanne besteht vorzugsweise aus rostfreiem Stahl oder Kunststoff, wie z.B. PE, PP oder PTFE, besonders bevorzugt PE. Weitere geeignete Materialien sind dem Fachmann bekannt. Die Materialdicke der wasserundurchlässigen Wanne wird vorzugsweise derart gewählt, dass trotz evtl. im Erdreich befindlicher Steine oder ähnlich spitzer Gegenstände, nicht die Gefahr von Undichtigkeiten, Rissen und/oder Löchern besteht. Materialdicken von mindestens 1 mm, vorzugsweise mindestens 1,2 mm sind erfindungsgemäß ausreichend. Zur Ausbildung der wasserundurchlässigen Wanne können daher auch Folien aus den geeigneten Materialien in der vorgesehenen Stärke zum Einsatz kommen, mit denen eine geeignete Mulde im Erdreich ausgelegt wird.

In einer bevorzugten Ausgestaltung der Erfindung beträgt die Höhe der wasserundurchlässigen Wanne 0,1 bis 3 m, vorzugsweise 0,5 bis 1,5 m. Der Durchmesser der wasserundurchlässigen Wanne bzw. deren Öffnung ist variabel gestaltbar und wird an die Menge des zu reinigenden und zu verdampfenden Wassers angepasst. Übliche Flächengrößen liegen im Bereich von 1 bis 500 m², vorzugsweise im Bereich von 5 bis 100 m², noch bevorzugter im Bereich von 10 bis 20 m².

Die mindestens eine Wasserzuführung ist erfindungsgemäß derart angeordnet, dass der Abstand der Wasserzuführung zum Wannenboden maximal ⅓ der Höhe der wasserundurchlässigen Wanne beträgt. Das bedeutet, dass erfindungsgemäß die Wasserzuführung möglichst nahe am Wannenboden angeordnet ist und die Wasserzuführung somit von unten her erfolgt. Das am Wannenboden ausgebrachte Wasser steigt dann erfindungsgemäß als Feuchtigkeit durch die Kapillarkräfte des anorganischen und/oder organischen Substrats vermittelt in der wasserundurchlässigen Wanne auf. Die Wasserzuführung kann in der mindestens einen Seitenwand oder im Wannenboden angeordnet sein. In einer bevorzugten Ausgestaltung der Erfindung ist die Wasserzuführung ein Drainagerohr, das vorzugsweise parallel zum Wannenboden angeordnet ist. Das Drainagerohr wird dabei entweder durch die Seitenwand hindurch oder durch die Öffnung der wasserundurchlässigen Wanne in diese hineingeführt. Das erfindungsgemäße Drainagerohr wird möglichst nah am Wannenboden entlang und über die gesamte Fläche des Wannenbodens geführt. Erfindungsgemäß sind dabei ein langes Drainagerohr, das in Schlaufen verlegt wird, als auch mehrere Drainagerohre, die von einer zentralen Wasserzuführung abzweigen, vorgesehen. Geeignete Ausgestaltungen sind dem Fachmann bekannt. Das erfindungsgemäße Drainagerohr besteht vorzugsweise aus rostfreiem Stahl oder Kunststoff, wie z.B. PE, PP oder PTFE, besonders bevorzugt PE.

In einer weiteren Ausgestaltung der Erfindung weist das Drainagerohr mindestens einen Be- und/oder Entlüfter auf. Dabei handelt es sich vorzugsweise um einen Zylinder, der das Drainagerohr mit der Umgebungsluft verbindet. Vorzugsweise ist der Be- bzw. Entlüfter senkrecht zum Drainagerohr angeordnet. Durch den Be- bzw. Entlüfter können noch im gereinigten Abwasser vorhandene Gase entweichen. Zudem kommt das Abwasser mit Sauerstoff in Kontakt und überträgt diesen zusammen mit dem Abwasser in das in der wasserundurchlässigen Wanne vorhandene Substrat.

Um eventuelle Geruchsbelästigungen durch die entweichenden Gase zu vermeiden, ist der Be- bzw. Entlüfter mit einem Filter, vorzugsweise einem Biofilter ausgerüstet. Dies bedeutet, dass der Be- und/oder Entlüfter Mittel zur Absorption und/oder zum Abbau von organischen und/oder anorganischen Gasen, vorzugsweise Aktivkohle, Wurzelholzschnitzel, Hackschnitzel und/oder Mikroorganismen, aufweist. Weitere geeignete Filtermaterialien sind dem Fachmann bekannt. Sind Mikroorganismen zum Abbau von organischen und/oder anorganischen Gasen vorgesehen, ist es wichtig, dass die Filter nicht austrocknen. In diesem Falle ist das Filtermaterial vorzugsweise ein Material mit einer großen Wasserspeicherkapazität oder es weist Dochte auf, die den Filter aus dem Drainagerohr mit Wasser befeuchten.

Erfindungsgemäß wird die Wasserzuführung für die Überführung des Wassers aus dem Wasservorratsbehälter in die wasserundurchlässige Wanne benötigt. Dazu weist die Wasserzuführung Mittel zur Erzeugung bzw. Aufrechterhaltung dieses Wasserflusses auf. In einer bevorzugten Ausgestaltung der Erfindung handelt es sich dabei um Pumpen, vorzugsweise um Klarwasserpumpen. Die Pumpen können bei verschiedenen Drücken und kontinuierlich oder intervallweise betrieben werden. Geeignete Parameter sind von der Größe der Behälter sowie der anfallenden Wassermenge und der Geschwindigkeit der Verdunstung und/oder der Aufnahme der Feuchtigkeit durch das umgebende Erdreich und/oder die Pflanzen abhängig. Die Einstellung geeigneter Pumpprofile ist dem Fachmann im Rahmen des Fachwissens und einfacher Routineversuche möglich.

Erfindungsgemäß weist die Kapillar-Anlage weiterhin einen Überlaufschutz auf, der die wasserundurchlässige Wanne mit dem Wasservorratsbehälter verbindet. Vorzugsweise ist der Überlaufschutz im oberen Bereich der wasserundurchlässigen Wanne angeordnet. Vorzugsweise beträgt der Abstand des Überlaufschutzes zum Wannenboden mindestens 2/3 der Höhe der wasserundurchlässigen Wanne. Weiter bevorzugt beträgt der Abstand des Überlaufschutzes zum Wannenboden maximal 95 %, besonders bevorzugt maximal 90 %, weiter bevorzugt maximal 80 % der Höhe der wasserundurchlässigen Wanne. Durch den Überlaufschutz wird der maximale Füllstand der wasserundurchlässigen Wanne reguliert und ein Überlaufen verhindert. Im Normalbetrieb ist die wasserundurchlässige Wanne zu ca. 50 bis 60 % gefüllt, bei Stoßbetrieb oder Überlastung wird überschüssiges Wasser durch den Überlaufschutz in den Wasservorratsbehälter überführt. Als Überlaufschutz kann jedes beliebige Rohr oder ein beliebiger Schlauch verwendet werden. Vorzugsweise sind wasserundurchlässige Wanne und Wasservorratsbehälter derart angeordnet, dass der Überlaufschutz ein leichtes Gefälle aufweist und das Wasser automatisch in den Wasservorratsbehälter zurückfließt. Alternativ können auch im Überlaufschutz Mittel zum aktiven Transport des Wassers, wie eine Pumpe, vorgesehen sein. In einer weiteren Ausgestaltung der Erfindung ist der Teil des Überlaufschutzes, der in die wasserundurchlässige Wanne reicht, mit einem Filter oder einem Sieb verschlossen, so dass feste Bestandteile, wie beispielsweise das Substrat, zurückgehalten werden, und nur das Wasser durch den Überlaufschutz abläuft.

Die erfindungsgemäße wasserundurchlässige Wanne ist mit einem organischen und/oder anorganischen Substrat gefüllt, das erfindungsgemäß eine Kapillarwirkung aufweist. Durch das organische und/oder anorganische Substrat wird also ein aufsteigender Kapillardruck in der undurchlässigen Wanne erzeugt. Dadurch wird gewährleistet, dass das ausschließlich im unteren Bereich der wasserundurchlässigen Wanne vorhandene flüssige Wasser als Feuchtigkeit in dem Substrat, also in der Bodenmatrix, aufsteigt und somit an die Oberfläche bzw. in die Wurzelnähe der zu bewässernden Pflanzen gelangt. Alternativ kann die aufsteigende Feuchtigkeit auch an das die wasserundurchlässige Wanne umgebende Erdreich bzw. das die Wanne umgebende Erdreich abgegeben werden. In einer weiteren Ausgestaltung der Erfindung können zusätzlich oder alternativ Textildochte, vorzugsweise aus Naturfasern, Kunststofffasern und/oder Glasfasern, in dem organischen und/oder anorganischen Substrat vorgesehen sein, welche zusätzlich eine Kapillarwirkung ausüben bzw. diese verstärken.

Bei dem organischen und/oder anorganischen Substrat mit der Kapillarwirkung handelt es sich vorzugsweise um Sand, Schotter, Kies, Ton, Blähton, Lava, Textilgewebematten bestehend aus Naturfasern, Kunststofffasern und/oder Glasfasern, einem Gemisch davon und/oder einem Gemisch mit den oben genannten Dochten. Die Korngröße bzw. Partikelgröße des organischen und/oder anorganischen Substrats liegt vorzugsweise im Bereich von 0,2 bis 20 mm, weiter bevorzugt im Bereich von 1 bis 20 mm, noch bevorzugter im Bereich von 1 bis 10 mm, am meisten bevorzugt im Bereich von 2 bis 8 mm.

In einer bevorzugten Ausgestaltung der wasserundurchlässigen Wanne ist die Füllhöhe des organischen und/oder anorganischen Substrats in der wasserundurchlässigen Wanne gleichgroß oder größer als die Höhe der wasserundurchlässigen Wanne. Das bedeutet, dass die wasserundurchlässige Wanne bevorzugt vollständig mit dem organischen und/oder anorganischen Substrat gefüllt ist oder das Substrat über die Oberkante der Seitenwände vorsteht. Dabei kann die wasserundurchlässige Wanne gerade so tief im Mutterboden bzw. im Erdreich angeordnet sein, dass die Ränder der Seitenwände mit der Geländeoberkante abschließen. Alternativ ist die wasserundurchlässige Wanne tiefer im Erdreich angeordnet. In einer weiteren bevorzugten Ausgestaltung ist die Füllhöhe gleichgroß oder größer als der Abstand vom Wannenboden bis zur Geländeoberkante. Das bedeutet, dass das organische und/oder anorganische Substrat als eine Art Beet oberhalb der Geländeoberkante aufgehäuft ist. Weiterhin kann das organische und/oder anorganische Substrat auch seitlich über die Seitenwände der wasserundurchlässigen Wanne hinausreichen, so dass ein Übergang von dem organischen und/oder anorganischen Substrat zum umgebenden Erdreich entsteht.

Erfindungsgemäß ist unterhalb der wasserundurchlässigen Wanne, d.h. tiefer im Erdreich, eine zusätzliche zweite oder weitere wasserundurchlässige Wanne angeordnet. Diese zweite Wanne verfügt ebenfalls über einen Wannenboden, mindestens eine umlaufende Seitenwand und eine Öffnung, wobei die Öffnung eine dem Wannenboden gegenüberliegende Fläche darstellt und durch den dem Wannenboden entgegengesetzten Rand der mindestens einen umlaufenden Seitenwand begrenzt ist. Dabei ist das Volumen der zusätzlichen wasserundurchlässigen Wanne größer als das Volumen der ersten wasserundurchlässigen Wanne. Die zweite zusätzliche wasserundurchlässige Wanne wird derart im Erdreich angeordnet, dass die erste wasserundurchlässige Wanne in der zweiten wasserundurchlässigen Wanne angeordnet ist und die Öffnungen der beiden Wannen an der Geländeoberkante positioniert sind. Das bedeutet, die zusätzliche wasserundurchlässige Wanne stellt eine weitere Abgrenzung des umgebenden Erdreichs gegenüber der Umwelt, insbesondere gegenüber dem Grundwasser dar. Dadurch wird vorteilhafterweise die erste wasserundurchlässige Wanne zusätzlich gegen ein Überlaufen bzw. gegen Undichtigkeiten im Boden oder Wandbereich gesichert. Zudem tritt die durch die Kapillarkräfte aufsteigende Feuchtigkeit in der Bodenmatrix nicht direkt ins ungesicherte Erdreich über, sondern wird nochmals in einem zusätzlich abgetrennten Bereich des Erdreichs gesammelt. Dies ist insbesondere dann von Vorteil, wenn sich auf Grund einer hohen Auslastung der Anlage aus der Feuchtigkeit nach dem Aufsteigen in der ersten wasserundurchlässigen Wanne und Übertritt in das umgebende Erdreich durch Sättigung im umgebenden Erdreich wieder Wassertröpfchen bilden sollten, die sonst versickern könnten. Die erfindungsgemäße Kapillar-Anlage ist somit mit einem doppelten Boden ausgestattet und genügt daher vorteilhafterweise den gesetzlichen Auflagen. Die weitere zweite wasserundurchlässige Wanne besteht vorzugsweise aus denselben Materialien wie die erste erfindungsgemäße wasserundurchlässige Wanne. Vorzugsweise werden zur Ausbildung der zusätzlichen wasserundurchlässigen Wanne Kunststofffolien, besonders bevorzugt PE-Folien, verwendet, mit denen eine geeignete Mulde im Erdreich ausgelegt wird.

Die zusätzliche wasserundurchlässige Wanne weist ein größeres Volumen als die erste wasserundurchlässige Wanne auf. Dabei ist vorzugsweise der Wannenboden der zweiten wasserundurchlässigen Wanne deutlich, d.h. vorzugsweise um den Faktor 1,2 bis 5, besonders bevorzugt um den Faktor 1,2 bis 2 vergrößert. Die Höhe der zweiten wasserundurchlässigen Wanne ist vorzugsweise nur wenig vergrößert, um die erfindungsgemäße Kapillar-Anlage auch bei hochliegendem Grundwasser verwenden zu können. Das Volumen der zweiten wasserundurchlässigen Wanne, das nicht durch die erste wasserundurchlässige Wanne eingenommen wird, ist vorzugsweise mit dem die Kapillar-Anlage umgebenden Sand bzw. dem umgebenden Erdreich gefüllt.

Erfindungsgemäß weist die zusätzliche wasserundurchlässige Wanne einen verschließbaren Abfluss auf. Dieser Abfluss ist vorzugsweise im Bereich des Wannenbodens angeordnet und verbindet die zusätzliche wasserundurchlässige Wanne wasserdicht mit dem Wasservorratsbehälter. Sollte es durch eine Sättigung des Erdreichs in der zusätzlichen wasserundurchlässigen Wanne zu einer Bildung von Wassertropfen kommen, wird dieses durch den Abfluss abgeführt und zurück in den Wasservorratsbehälter geleitet. Somit kann Feuchtigkeit, die sich wieder als Wasser niederschlägt, zurück in den Kapillarkreislauf geführt werden. Als Abfluss kann jedes beliebige Rohr oder ein beliebiger Schlauch verwendet werden. Vorzugsweise sind die zusätzliche wasserundurchlässige Wanne und der Wasservorratsbehälter derart angeordnet, dass der Abfluss ein leichtes Gefälle aufweist und das Wasser automatisch in den Wasservorratsbehälter zurück fließt. Alternativ können auch im Abfluss Mittel zum aktiven Transport des Wassers, wie eine Pumpe vorgesehen sein. In einer weiteren Ausgestaltung der Erfindung weist der verschließbare Abfluss zusätzlich einen Filter oder ein Sieb auf, so dass feste Bestandteile, wie beispielsweise das Erdreich, zurückgehalten werden.

Erfindungsgemäß ist der verschließbare Abfluss mit einem Sammel- und/oder Kontrollschacht wasserdicht verbunden. Unter einem Sammel- und/oder Kontrollschacht wird erfindungsgemäß ein Behälter verstanden, der ebenfalls im Erdreich eingelassen und von der Geländeoberkante aus zugänglich ist. Aus dem Sammel- und/oder Kontrollschacht können Wasserproben entnommen und einer Analytik zugeführt werden. Hygienisch unbedenkliches, im Sammel- und/oder Kontrollschacht gesammeltes Wasser kann dann einem normalen Vorfluter oder einer Brauchwasserverwertung, beispielsweise in der Toilettenspülung, zugeführt werden. Vorzugsweise ist der Sammel- und/oder Kontrollschacht mit dem Wasservorratsbehälter verbunden, so dass ein Überlaufen verhindert wird und überschüssiges Wasser dem Kapillarkreislauf wieder zugeführt wird.

In einer besonders bevorzugten Ausgestaltung der Erfindung weist das organische und/oder anorganische Substrat Uferpflanzen (litorale Helophyten) und/oder Sumpfpflanzen (Helophyten), vorzugsweise Röhrichtpflanzen (Arundophyten), Sauergrasgewächse (Cyperaceae) und/oder Binsengewächse (Juncaceae), noch bevorzugter Binsen (Juncus), auf. Je nach Vegetationszone in der die Kapillar-Anlage verwendet werden soll, sind unterschiedliche Arten aus den genannten Familien besonders geeignet. Eine Auswahl geeigneter Pflanzen liegt im Rahmen des normalen Fachwissens. In einer weiteren bevorzugten Ausgestaltung der Erfindung ist auch das in der zweiten wasserundurchlässigen Wanne angeordnete Erdreich mit den genannten Uferpflanzen und/oder Sumpfpflanzen bewachsen.

Erfindungsgemäß ist die Kapillar-Anlage derart im Erdreich angeordnet, dass der Wannenboden der ersten wasserundurchlässigen Wanne und der zusätzlichen zweiten wasserundurchlässigen Wanne gegenüberliegend zur Geländeoberkante des Erdreichs angeordnet sind und der Abstand vom Wannenboden der ersten wasserundurchlässigen Wanne bis zur Geländeoberkante gleichgroß oder größer als die Höhe der ersten wasserundurchlässigen Wanne ist. Das bedeutet, dass die erste wasserundurchlässige Wanne mit der Geländeoberkante bündig abschließt oder vollständig von Erdreich überdeckt sein kann. In dieser Ausgestaltung der Erfindung kann die wasserundurchlässige Wanne tiefer im Erdreich angeordnet sein, so dass über der Wannenöffnung noch eine Schicht Erdreich angeordnet ist. Der bevorzugte Abstand zwischen dem Wannenboden und der Geländeoberkante ist maximal 30 cm, vorzugsweise maximal 20 cm, noch bevorzugter 5 bis 10 cm größer als die Höhe der wasserundurchlässigen Wanne. In der Ausgestaltung mit zweiter wasserundurchlässiger Wanne ist diese vorzugsweise derart tief im Erdreich angeordnet, dass die Ränder ihrer Seitenflächen und ihre Öffnung mit der Geländeoberkante abschließen.

In einer bevorzugten Ausgestaltung der Erfindung ist die Kapillar-Anlage im Erdreich, d.h. im Mutterboden einer Freilandfläche angeordnet. In einer alternativen Ausgestaltung der Erfindung ist das Erdreich eines Gewächshauses oder eines vergleichbaren Pflanzenzuchtgebäudes.

Die Erfindung betrifft weiterhin eine Kläranlage, die mindestens eine Kapillar-Anlage der Erfindung aufweist. Beispielsweise kann die erfindungsgemäße Kapillar-Anlage anstelle eines Vorfluters in kommunalen Kläranlagen eingesetzt werden.

In einer bevorzugten Ausgestaltung der Erfindung handelt es sich bei der Kläranlage, die eine erfindungsgemäße Kapillar-Anlage aufweist, um eine Kleinstkläranlage mit einem maximalen Abwasservolumen von 8 m³/d oder eine kleine Kläranlage mit einem Abwasservolumen von 8 bis 800 m³/d. Dies entspricht einer an die Kläranlage angeschlossenen Einwohnerzahl von ca. 50 Einwohnern bei der Kleinstkläranlage bzw. 50 - 5000 Einwohnern bei der kleinen Kläranlage. Die erfindungsgemäße Kapillar-Anlage ersetzt bei dieser Anordnung die Verrieselungsflächen. Die Erfindung ist somit bevorzugt sowohl auf Grundstücken von Einfamilienhäusern und/oder Ferienhäuschen als auch für das in größeren Gebäude- und/oder Häuserkomplexen anfallende Abwasser einsetzbar.

Die erfindungsgemäße Kapillar-Anlage kann auch in sonstigen Sammel- oder Speichereinheiten und/oder Wasser-Aufbereitungsanlagen eingesetzt und/oder nachgerüstet werden. Beispielsweise gesammeltes Niederschlagswasser, wie von Dachflächen gesammeltes Regenwasser oder von auf anderen, zumindest teilweise wasserundurchlässigen Flächen gesammeltes und bei Bedarf aufbereitetes Wasser, können in der erfindungsgemäßen Kapillar-Anlage verwendet werden.

In einer bevorzugten Ausgestaltung der Erfindung umfasst die Kläranlage eine abflusslose Sammelgrube für häusliches Abwasser und/oder ein System zur Sequentiellen Biologischen Reinigung (SBR-System), ein Mittel zur Kompostierung der Dickstoffe, vorzugsweise einen Thermokomposter, und eine erfindungsgemäße Kapillar-Anlage. Dabei ist die abflusslose Sammelgrube und/oder das SBR-Becken des SBR-Systems gleichzeitig der Wasservorratsbehälter der Kapillar-Anlage.

Bei einer abflusslosen Sammelgrube handelt es sich um ein Gefäß, in dem häusliche Abwässer gesammelt und gelagert werden. Die Entsorgung erfolgt je nach Abwassermenge ein- bis zweimal jährlich. In den stehenden Abwässern setzen sich allerdings die Feststoffe ab, so dass eine Vorreinigung stattfindet und das überstehende Wasser in eine erfindungsgemäße Kapillar-Anlage überführt werden kann.

Vorzugsweise weist eine erfindungsgemäße Kläranlage ein SBR-System auf. Dabei handelt es sich um ein zweistufiges System. Das erste Becken, d.h. der Schlammspeicher erfüllt ähnliche Funktionen, wie eine abflusslose Sammelgrube. In dem zweiten Becken, dem eigentlichen SBR-Becken findet intervallweise eine biologische Reinigung des überstehenden Wassers aus dem Schlammspeicher statt. Das derart vorgereinigte Wasser kann in der erfindungsgemäßen Kapillar-Anlage verwendet werden.

Die Feststoffe werden vorzugsweise regelmäßig abgepumpt und in einem Mittel zur Kompostierung der Dickstoffe, vorzugsweise einen Thermokomposter, ebenfalls vor Ort verwertet. Eine schnelle Versickerung in das Grundwasser kann durch die Verwendung der erfindungsgemäßen Kläranlage somit dauerhaft entfallen.

Die erfindungsgemäße Kapillar-Anlage kann weiterhin mit allen weiteren, dem Fachmann bekannten Kläranlagen und/oder Anlagen zur Vorreinigung von Abwasser, wie beispielsweise Pflanzenkläranlagen, Festbettkläranlagen, Anlagen zur mechanischen Vorreinigung Teichanlagen kombiniert werden.

Die Erfindung betrifft weiterhin ein Verfahren zur Reinigung von Abwasser, gereinigtem Abwasser und/oder Regenwasser, wobei das Abwasser, gereinigte Abwasser und/oder Regenwasser aufgefangen und gesammelt wird, optional mechanisch und/oder biologisch vorgereinigt wird, dem Wasservorratsbehälter einer erfindungsgemäßen Kapillar-Anlage zugeführt wird, und in die wasserundurchlässige Wanne der Kapillar-Anlage überführt wird. Erfindungsgemäß steigt das Abwasser, gereinigte Abwasser und/oder Regenwasser in der wasserundurchlässigen Wanne der erfindungsgemäßen Kapillar-Anlage mittels Kapillarkräften auf und wird als gereinigtes Wasser, gereinigter Wasserdampf und/oder Wasserdunst an die Umgebungsluft und/oder als gereinigte Feuchtigkeit an das umgebende Erdreich abgegeben oder zur Bewässerung von Pflanzen oder als Brauchwasser eingesetzt. Die aus der Kapillar-Anlage entweichende Feuchtigkeit ist hygienisch unbedenklich. Vorzugsweise betrifft die Erfindung somit ein Verfahren zur Hygienisierung von Wasser und/oder Abwasser.

In einer bevorzugten Ausgestaltung des erfindungsgemäßen Verfahrens wird das Abwasser, gereinigte Abwasser und/oder Regenwasser in der ersten und/oder zweiten Reinigungsstufe einer kommunalen Kläranlage mechanisch und/oder biologisch vorgereinigt. In einer weiteren Ausgestaltung entspricht die Vorreinigung des Abwassers der Reinigung in einer kleinen Kläranlage, der Reinigung in einer Kleinstkläranlage und/ oder der Reinigung in einer abflusslosen Sammelgrube.

Die wasserundurchlässige Wanne der erfindungsgemäßen Kapillar-Anlage wird vorzugsweise kontinuierlich oder intervallweise mit Abwasser, gereinigtem Abwasser und/oder Regenwasser beschickt.

In einer bevorzugten Ausgestaltung der Erfindung wird das erfindungsgemäß gereinigte Wasser als aufsteigende Feuchtigkeit zur Bewässerung der auf dem organischen und/oder anorganischen Substrat wachsenden Pflanzen oder als Brauchwasser verwendet. Durch den Übergang des Substrats der erfindungsgemäßen Kapillar-Anlage in den Mutterboden des umgebenden Erdreichs, können auch Pflanzen auf an die Kapillar-Anlage angrenzenden Flächen so mit Feuchtigkeit versorgt werden.

Die Erfindung soll nachstehend anhand von zumindest teilweise in den Figuren dargestellten Ausführungsbeispielen näher erläutert werden.

Es zeigen:
- Figur 1: eine Systemskizze einer nicht erfindungsgemäßen Kapillar-Anlage als vertikalen Querschnitt,
- Figur 2: eine Systemskizze einer Kläranlage mit integrierter, nicht erfindungsgemäßen Kapillar-Anlage als vertikalen Querschnitt,
- Figur 3: eine Systemskizze einer Kläranlage mit integrierter, nicht erfidnungsgemäßen Z Kapillar-Anlage als Aufsicht,
- Figur 4: eine Systemskizze einer erfindungsgemäßen Kapillar-Anlage mit zusätzlicher wasserundurchlässiger Wanne als vertikalen Querschnitt.

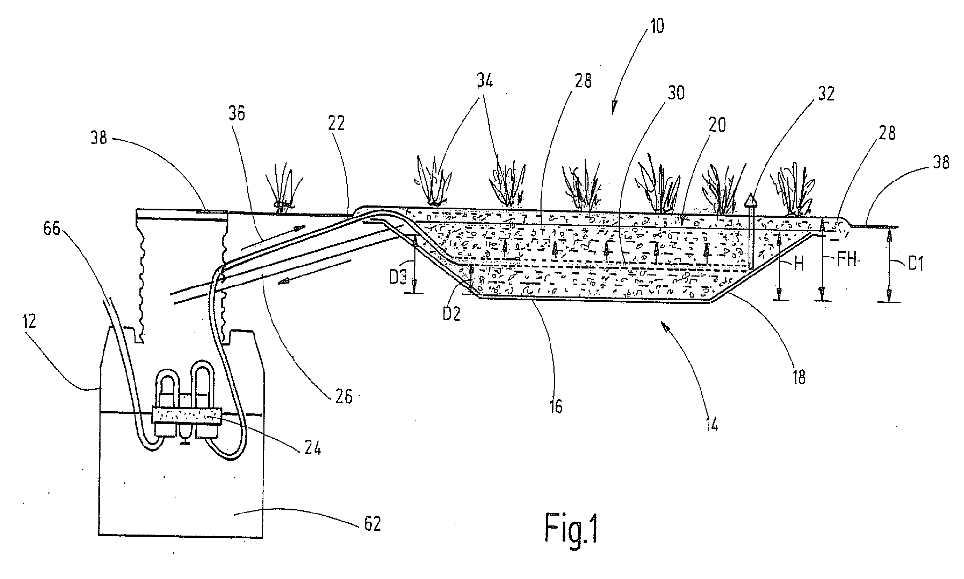

Figur 1 zeigt eine nicht erfindungsgemäße Kapillar-Anlage 10 umfassend einen Wasservorratsspeicher 12 und eine wasserundurchlässige Wanne 14 mit einer Höhe H. Die wasserundurchlässige Wanne 14 wird durch einen Wannenboden 16 und eine umlaufende Seitenwand 18 gebildet, die aus einer 1,2 mm starken PE-Folie geformt werden. Die Höhe H beträgt 0,60 m. Dem Wannenboden 16 gegenüberliegend befindet sich eine Öffnung 20. Die gesamte wasserundurchlässige Wanne 14 ist mit einem organischen bzw. anorganischen Substrat 28 mit Kapillarwirkung, wie z.B. Kies mit einer Korngröße von 2 bis 8 mm gefüllt. Die Füllhöhe FH der wasserundurchlässigen Wanne 14 mit dem Kies beträgt 0,80 m. Auf der Kiesoberfläche sind Ufer- bzw. Sumpfpflanzen 34 gepflanzt. In mittleren Breitengraden sind Binsen als Ufer- bzw. Sumpfpflanzen 34 besonders geeignet.

Der Wasservorratsspeicher 12 ist über eine Wasserzuführung 22 aufweisend ein Mittel 24 zur Erzeugung bzw. Aufrechterhaltung eines Wasserzuflusses, und über einen Überlaufschutz 26 mit der wasserundurchlässigen Wanne 14 verbunden. In dem Wasservorratsspeicher 12 befindet sich Abwasser 64, gereinigtes Abwasser und/oder Regenwasser 62. Die Zuführung des Wassers 62, 64 erfolgt kontinuierlich oder intervallweise durch einen Wassereinlass 66. Bei dem Mittel 24 zur Erzeugung bzw. Aufrechterhaltung eines Wasserzuflusses handelt es sich um eine Klarwasserpumpe mit Druckschlauch. Der Wasserrücklauf durch den Überlaufschutz 26 erfolgt auf Grund eines Gefälles automatisch. Die Wasserzuführung 22 ist als ein Drainagerohr 30 ausgestaltet, das mit einem Abstand D2 in der Nähe des Wannenbodens 16 verlegt ist. Der Abstand D2 zum Wannenboden 16 beträgt hier ca. 10 cm. Bei dem Drainagerohr 30 handelt es sich um ein PE-Rohr mit einem Durchmesser von 100 mm und regelmäßig angeordneten Wasseraustrittsöffnungen. Das gereinigte Abwasser 62 kann somit in den Kies 28 übertreten und von dort mittels der Kapillarkräfte als Feuchtigkeit in der Bodenmatrix aufsteigen. Am Ende des Drainagerohres 30 ist ein Entlüfter 32 angeordnet, der mit Holzschnitzeln gefüllt ist. Der Entlüfter 32 ermöglicht eine blasenfreie Befüllung des Drainagerohres 30. Durch die Holzschnitzel werden Geruchsbelästigungen vermieden.

Der Überlaufschutz 26 ist ebenfalls ein PE-Rohr mit einem Durchmesser von 100 mm. Der Abstand D3 vom Wannenboden 16 bis zum Überlaufschutz 26 beträgt ca. 0,50 m. Die wasserundurchlässige Wanne 14 und der Wasservorratsbehälter 12 sind unterhalb der Geländeoberkante 38 angeordnet, d. h. sie sind vollständig vom Erdreich 36 umgeben. Der Abstand D1 vom Wannenboden 16 bis zur Geländeoberkante 38 beträgt 0,70 m.

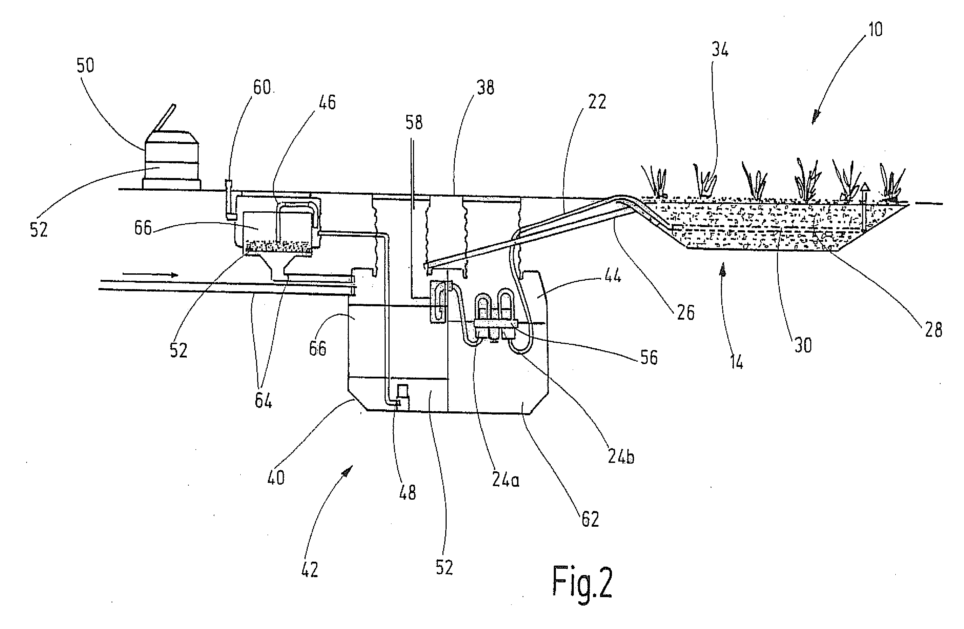

Figur 2 zeigt eine nicht erfindungsgemäße Kapillar-Anlage 10 als Teil einer Kläranlage. Bezugszeichen gelten analog wie in Figur 1. Abwasser 64 wird durch einen Wassereinlass 66 in ein Schlammbecken 40 eines SBR-Systems 42 gegeben. Feststoffe 52 setzen sich am Boden des Schlammbeckens 40 ab und werden mittels einer Feststoffpumpe 48 in einen Separator 46 überführt. Am Boden des Separators 46 entsteht somit eine Art Feststofffilter, durch den noch in den Feststoffen 52 enthaltenes Abwasser 64 durchsickert und vorgereinigt wird. Aus dem Abwasser 64 ausgasende Gase werden über einen Bioluftfilter 60 aus dem Separator 46 abgeführt. Die Feststoffe 52 werden nach Bedarf aus dem Separator 46 entnommen, in einen Thermokomposter 50 überführt und dort verwertet.

Abwasser 64 aus dem Separator 46 wird zurück in das Schlammbecken 40 geleitet. Ein Füllstandsmesser 58 überwacht den Füllstand im Schlammbecken 40, um ein Überlaufen des Schlammbeckens 40 zu verhindern. Der wässrige Überstand im Schlammbecken 40 wird mittels einer Klarwasserpumpe 24a in ein SBR-Becken 44 gepumpt, in dem eine biologische Reinigung stattfindet, so dass gereinigtes Abwasser 62 entsteht. Mittels der Klarwasserpumpe 24b wird das gereinigte Abwasser 62 in die wasserundurchlässige Wanne 14 der Kapillar-Anlage 10 überführt. Der Überlaufschutz 26 führt zurück in das Schlammbecken 40.

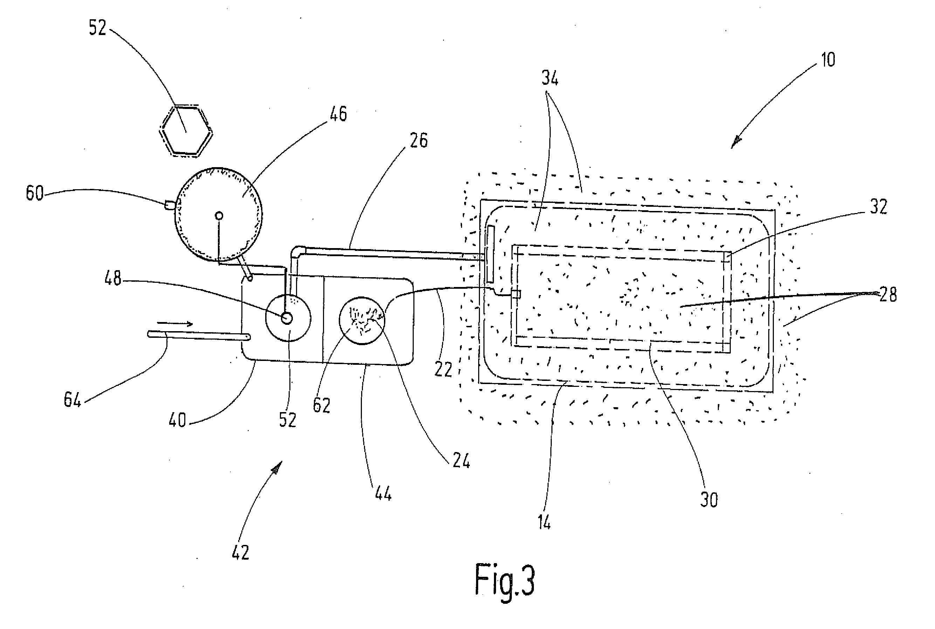

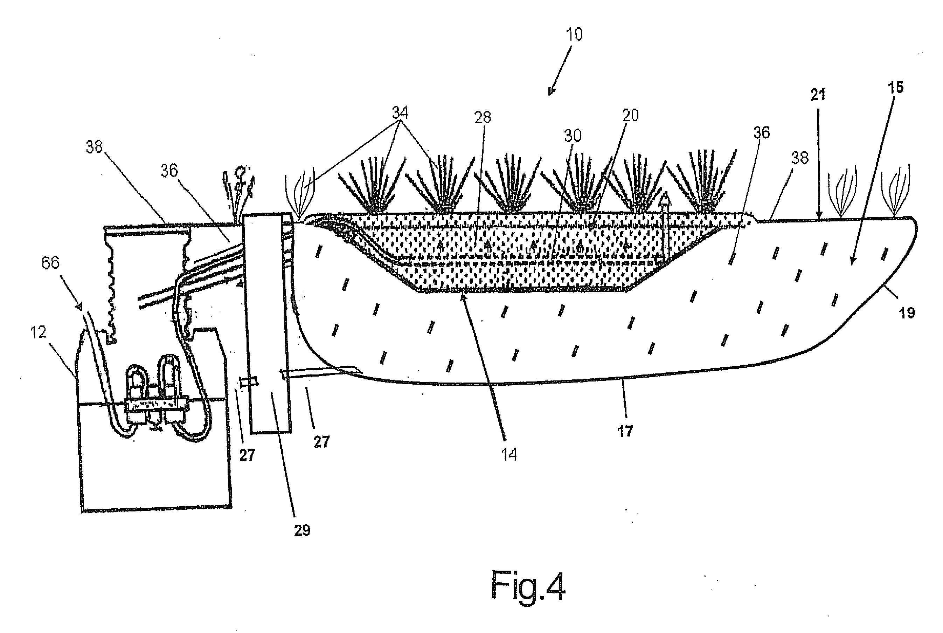

Figur 3 zeigt die Kläranlage in der Aufsicht. Die Bezugszeichen gelten analog. Die wasserundurchlässige Wanne 14 ist als Viereck ausgestaltet und das Drainagerohr 30 ist ebenfalls als Viereck verlegt. Der Entlüfter 32 befindet sich gegenüberliegend der Wasserzuführung 22. Die Kapillar-Anlage 10 umfasst eine Fläche von ca. 2 m²/Person. Die Bepflanzung mit Binsen 34 erfolgte über die Fläche der Kapillar-Anlage 10 hinaus. Figur 4 zeigt eine erfindungsgemäße Kapillar-Anlage 10 mit doppeltem Boden, d.h. mit einer zusätzlichen wasserundurchlässigen Wanne 15. Bezugszeichen gelten analog wie in Figur 1. Ausführlich werden nur die Unterschiede beschrieben. Die zusätzliche wasserundurchlässige Wanne 15 wird durch einen Wannenboden 17 und eine umlaufende Seitenwand 19 gebildet, wobei Boden und Seitenwände aus einer 1,2 mm starken PE-Folie geformt werden. Die Höhe der zusätzlichen Wanne 15 beträgt 0,9 m. Dem Wannenboden 17 gegenüberliegend befindet sich eine Öffnung 21. In der Wanne 15 ist die wasserundurchlässige Wanne 14 angeordnet. Das verbleibende Volumen der zusätzlichen Wanne 15 ist mit durchlässigem Erdreich 36 zur horizontalen oder vertikalen Versicherung in der Bodenmatrix gefüllt. Auf dem Erdreich 36 sind Ufer- bzw. Sumpfpflanzen 34 gepflanzt. In mittleren Breitengraden sind Binsen als Ufer- bzw. Sumpfpflanzen 34 besonders geeignet.

Ein verschließbarer Abfluss 27 führt von der Seitenwand 19 zu einem Sammel- und Kontrollschacht 29 und von dort zurück in den Wasservorratsbehälter 12. Bei dem verschließbaren Abfluss 27 handelt es sich um ein PE-Rohr mit einem Durchmesser von 100 mm. Der Sammel- und Kontrollschacht 29 ist ein PE-Kunststoffbehälter mit Deckel mit einem Volumen von 1 m³. Der Abfluss 27 ist derart mit dem Sammel- und Kontrollschacht 29 und dem Wasservorratsbehälter 12 verbunden, dass Wasser durch ein Gefälle automatisch zuerst in den Sammel- und Kontrollschacht 29 und dann in den Wasservorratsbehälter 12 fließt. Im Sammel- und Kontrollschacht kann auch hygienisch unbedenkliches Brauchwasser entnommen werden.

### Beispiel 1: Funktionstest

Eine abflusslose Sammelgrube vom Typ ROTA (DIBT Nr. Z 40.24-286) mit integrierter Technik zur Kompostierung und Hygienisierung der Dickstoffe wurde mit einer Kapillar-Anlage zur Verdunstung von hochgradig gereinigtem Abwasser kombiniert. Diese Kläranlage wurde zur Feststellung der Arbeitsweise im Testbetrieb verwendet und entspricht dem in den Figuren 2 und 3 gezeigten Anlagentyp.

Nach 7, 10 und 14 Wochen wurden Beprobungen zur Bestimmung der anorganischen Stickstoffparameter durchgeführt. An allen Beprobungstagen wurde zudem der Zählerstand von der Brunnen- und Trinkwasseruhr abgelesen. Der Wasserstand in der wasserundurchlässigen Wanne der Kapillar-Anlage wurde unterhalb der Geländeoberkante bestimmt.

Der Nitratgehalt im Ablauf der Anlage konnte mit der Zeit deutlich verringert werden und liegt zum Ende des Testlaufs bei unter 1 mg/l. Der Nitritgehalt liegt ebenfalls bei unter 1 mg/l. Der Gesamtstickstoffgehalt im Ablauf konnte mit der Zeit von 110 mg/l auf 85 mg/l gesenkt werden, ist aber auf Grund eines erhöhten Restammoniumgehalts noch erhöht. Da sich die biologischen Abbauprozesse erst im Laufe der Zeit entwickeln, ist erfahrungsgemäß die volle Leistung des biologischen Abbaus erst nach ca. 6 Monaten Betriebszeit zu erreichbar. Daher ist zu erwarten, dass sich der biologische Abbau in der Kläranlage im Laufe der Zeit weiter verbessert und eine Senkung des Restammonium- bzw. des Gesamtstickstoffsgehalts bis unter den Grenzwert möglich ist.

Der durchschnittliche Wasserverbrauch in der Anlage betrug ca. 0,2 m³/d. Da der Wasserstand in der wasserundurchlässigen Wanne der Kapillar-Anlage grundsätzlich weit unterhalb der Oberkante lag, konnte keine Versickerung in den Untergrund festgestellt werden. Gleichzeitig wurde festgestellt, dass seit der letzten Probennahme auch keine Erhöhung des Wasserstandes zu verzeichnen war, sondern ein Gleichstand. Daraus resultiert, dass der Verbrauch des gereinigten Wassers zu 100 % durch Verdunstung bzw. durch Aufnahme in die Pflanzen oder Befeuchtung des umgebenden Erdreichs erfolgte.

### Bezugszeichenliste

- 10: Kapillar-Anlage
- 12: Wasservorratsbehälter
- 14,15: wasserundurchlässige Wanne
- 16,17: Wannenboden
- 18,19: Seitenwand
- 20,21: Öffnung
- 22: Wasserzuführung
- 24a, b: Mittel zur Erzeugung/Aufrechterhaltung eines Wasserzuflusses
- 26: Überlaufschutz
- 27: Abfluss
- 28: organisches/anorganisches Substrat
- 29: Sammel- und/oder Kontrollschacht
- 30: Drainagerohr
- 32: Belüfter/Entlüfter
- 34: Ufer-/Sumpfpflanze
- 36: Erdreich
- 38: Geländeoberkante
- 40: abflusslose Sammelgrube / Schlammbecken
- 42: Sequentielles Biologisches Reinigungs(SBR)-System
- 44: SBR-Becken
- 46: Separator
- 48: Feststoffpumpe
- 50: Thermokomposter
- 52: Feststoff
- 56: Klarwasserpumpe
- 58: Füllstandsmesser
- 60: Bioluftfilter
- 62: gereinigtes Abwasser / Regenwasser
- 64: Abwasser
- 66: Wassereinlass
- D1, D2, D3: Abstand
- H: Höhe
- FH: Füllhöhe

## Patentansprüche

1. Kapillar-Anlage (10) umfassend
- mindestens einen Wasservorratsbehälter (12),
- mindestens eine wasserundurchlässige Wanne (14) mit einer Höhe (H), umfassend einen Wannenboden (16), eine umlaufende Seitenwand (18) und eine Öffnung (20), wobei die Öffnung (20) eine dem Wannenboden (16) gegenüberliegende Fläche darstellt und durch den dem Wannenboden (16) entgegengesetzten Rand der umlaufenden Seitenwand (18) begrenzt ist und wobei sich die Höhe (H) vom Wannenboden (16) bis zur Öffnung (20) erstreckt,
- mindestens eine Wasserzuführung (22) aufweisend Mittel (24) zur Erzeugung und/oder Aufrechterhaltung eines Wasserzuflusses aus dem mindestens einen Wasservorratsbehälter (12) in die mindestens eine wasserundurchlässige Wanne (14), wobei ein Abstand (D2) der Wasserzuführung (22) zum Wannenboden (16) maximal ⅓ der Höhe (H) der wasserundurchlässigen Wanne (14) beträgt,
- mindestens einen Überlaufschutz (26), wobei der Überlaufschutz (26) die mindestens eine wasserundurchlässige Wanne (14) mit dem mindestens einen Wasservorratsbehälter (12) wasserdicht verbindet, und
- mindestens ein organisches und/oder anorganisches Substrat (28), das in der mindestens einen wasserundurchlässigen Wanne (14) angeordnet ist und das eine Kapillarwirkung aufweist, **dadurch gekennzeichnet, dass**
die Kapillar-Anlage (10) derart im Erdreich (36) anordenbar ist, dass der Wannenboden (16) der Geländeoberkante (38) des Erdreichs (36) gegenüberliegt und die Öffnung (20) zwischen dem Wannenboden (16) und der Geländeoberkante (38) angeordnet ist und der Abstand (D1) vom Wannenboden (16) bis zur Geländeoberkante (38) gleichgroß oder größer als die Höhe (H) der wasserundurchlässigen Wanne (14) ist, dass die Kapillar-Anlage (10) eine weitere wasserundurchlässige Wanne (15) mit einem Wannenboden (17), mindestens einer umlaufenden Seitenwand (19) und einer Öffnung (21) aufweist, wobei die Öffnung (21) eine dem Wannenboden (17) gegenüberliegende Fläche darstellt und durch den dem Wannenboden (17) entgegengesetzten Rand der mindestens einen umlaufenden Seitenwand (19) begrenzt ist, wobei das Volumen der weiteren wasserundurchlässigen Wanne (15) größer als das Volumen der wasserundurchlässigen Wanne (14) ist und wobei die weitere wasserundurchlässige Wanne (15) derart im Erdreich (36) anordenbar ist, dass die wasserundurchlässige Wanne (14) in der weiteren wasserundurchlässigen Wanne (15) angeordnet ist und die Öffnungen (20, 21) an der Geländeoberkante (38) positioniert sind, und
**dass** die zusätzliche wasserundurchlässige Wanne (15) einen verschließbaren Abfluss (27) aufweist, wobei der Abfluss (27) die zusätzliche wasserundurchlässige Wanne (15) mit dem Wasservorratsbehälter (12) und/oder einem Sammel- und/oder Kontrollschacht (29) wasserdicht verbindet..

2. Kapillar-Anlage (10) nach Anspruch 1, **dadurch gekennzeichnet, dass** die Wasserzuführung (22) ein Drainagerohr (30) ist, das parallel zum Wannenboden (16) angeordnet ist.

3. Kapillar-Anlage (10) nach Anspruch 2, **dadurch gekennzeichnet, dass** das Drainagerohr (30) mindestens einen Belüfter und/oder Entlüfter (32) aufweist, der vorzugsweise senkrecht zum Drainagerohr (30) angeordnet ist.

4. Kapillar-Anlage nach einem der vorhergehenden Ansprüche, **dadurch gekennzeichnet, dass** die Höhe (H) der Wanne (14) von 0,1 bis 3 m, vorzugsweise von 0,5 bis 1,5 m beträgt.

5. Kapillar-Anlage (10) nach Anspruch 1, **dadurch gekennzeichnet, dass** das organische und/oder anorganische Substrat (28) Sand, Schotter, Kies, Ton, Blähton, Lava, Textilgewebematten bestehend aus Naturfasern, Kunststofffasern und/oder Glasfasern, ein Gemisch davon und/oder ein Gemisch mit Textildochten bestehend aus Naturfasern, Kunststofffasern und/oder Glasfasern ist.

6. Kapillar-Anlage (10) nach Anspruch 5 , **dadurch gekennzeichnet, dass** das organische und/oder anorganische Substrat (28) eine Partikelgröße im Bereich von 0,2 bis 20 mm, vorzugsweise im Bereich von 1 bis 20 mm, noch bevorzugter im Bereich von 1 bis 10 mm, am meisten bevorzugt im Bereich von 2 bis 8 mm aufweist.

7. Kapillar-Anlage (10) nach einem der vorhergehenden Ansprüche, **dadurch gekennzeichnet, dass** das organische und/oder anorganische Substrat (28) Uferpflanzen und/oder Sumpfpflanzen, vorzugsweise Röhrichtpflanzen, Sauergrasgewächse und/oder Binsengewächse, noch bevorzugter Binsen aufweist.

8. Kläranlage **dadurch gekennzeichnet, dass** die Kläranlage mindestens eine Kapillar-Anlage (10) nach einem der Ansprüche 1 bis 7 aufweist.

9. Kläranlage nach Anspruch 8, **dadurch gekennzeichnet, dass** die Kläranlage eine abflusslose Sammelgrube (40) für häusliches Abwasser und/oder ein SBR-System (42), ein Mittel (50) zur Kompostierung der Dickstoffe, vorzugsweise einen Thermokomposter, und eine Kapillar-Anlage (10) nach einem der Ansprüche 1 bis 7 aufweist, wobei die abflusslose Sammelgrube (40) und/oder das SBR-Becken (44) des SBR-Systems (42) der Wasservorratsbehälter (12) der Kapillar-Anlage (10) ist.

10. Verfahren zur Reinigung und Hygienisierung von Wasser, Abwasser, gereinigtem Abwasser und/oder Regenwasser **dadurch gekennzeichnet, dass** das Wasser, Abwasser, gereinigte Abwasser und/oder Regenwasser aufgefangen und gesammelt wird, optional mechanisch und/oder biologisch vorgereinigt wird, dem Wasservorratsbehälter (12) einer Kapillar-Anlage (10) nach einem der Ansprüche 1 bis 7 zugeführt wird, und in die wasserundurchlässige Wanne (14) der Kapillar-Anlage (10) überführt wird,
wobei das Wasser, Abwasser, gereinigte Abwasser und/oder Regenwasser in der wasserundurchlässigen Wanne (14) mittels Kapillarkräften in der Bodenmatrix aufsteigt und als gereinigter Wasserdampf an die Umgebungsluft und/oder als Feuchtigkeit an das umgebende Erdreich oder an die weitere wasserundurchlässige Wanne (15), zur horizontalen und vertikalen Versickerung in der Bodenmatrix, abgegeben oder zur Bewässerung von Pflanzen oder zur Brauchwassernutzung eingesetzt wird.

11. Verfahren nach Anspruch 10, **dadurch gekennzeichnet, dass** die wasserundurchlässige Wanne (14) der Kapillar-Anlage (10) kontinuierlich oder intervallweise mit Abwasser, gereinigtem Abwasser und/oder Regenwasser beschickt wird.

## Claims

1. A capillary plant (10) comprising:
- at least one water reservoir (12),
- at least one watertight trough (14) having a height (H) and comprising a trough bottom (16), a circumferential sidewall (18) and an opening (20), wherein the opening (20) represents a face arranged opposite the trough bottom (16) and is delimited by that edge of the circumferential sidewall (18) which is arranged opposite the trough bottom (16), and wherein the height (H) extends from the trough bottom (16) to the opening (20),
- at least one water inflow device (22) having means (24) for generating and/or maintaining an inflow of water from the at least one water reservoir (12) into the at least one watertight trough (14), wherein a distance (D2) between the water inflow device (22) and the trough bottom (16) is not greater than one third of the height (H) of the watertight trough (14),
- at least one overflow protection device (26), wherein the overflow protection device (26) connects the at least one watertight trough (14) to the at least one water reservoir (12) in such a manner that a watertight connection is established, and
- at least one organic and/or inorganic substrate (28) that is arranged in the at least one watertight trough (14) and that exhibits capillary action, **characterized in that**
the capillary plant (10) can be arranged in the soil (36) in such a manner that the trough bottom (16) is arranged opposite the upper terrain edge (38) of the soil (36) and the opening (20) is arranged between the trough bottom (16) and the upper terrain edge (38) and the distance (D1) between the trough bottom (16) and the upper terrain edge (38) is equal to or greater than the height (H) of the watertight trough (14), that the capillary plant (10) has a further watertight trough (15) with a trough bottom (17), at least one circumferential sidewall (19) and an opening (21), wherein the opening (21) represents a face arranged opposite the trough bottom (17) and is delimited by that edge of the at least one circumferential sidewall (19) which is arranged opposite the trough bottom (17), wherein the volume of the further watertight trough (15) is greater than the volume of the watertight trough (14) and wherein the further watertight trough (15) can be arranged in the soil (36) in such a manner that the watertight trough (14) is arranged in the further watertight trough (15) and the openings (20, 21) are positioned at the upper terrain edge (38), and
that the additional watertight trough (15) has a lockable drain (27), wherein the drain (27) connects the additional watertight trough (15) to the water reservoir (12) and/or to a collecting and/or control shaft (29) in such a manner that a watertight connection is established.

2. The capillary plant (10) according to Claim 1, **characterized in that** the water inflow device (22) is a drainage pipe (30) arranged parallel to the trough bottom (16).

3. The capillary plant (10) according to Claim 2, **characterized in that** the drainage pipe (30) has at least one aerator and/or deaerator (32) preferably arranged perpendicular to the drainage pipe (30).

4. The capillary plant according to any one of the preceding claims, **characterized in that** the height (H) of the trough (14) is from 0.1 to 3 m, preferably from 0.5 to 1.5 m.

5. The capillary plant (10) according to Claim 1, **characterized in that** the organic and/or inorganic substrate (28) is sand, broken stone, gravel, clay, swelling clay, lava, textile fabric mats consisting of natural fibers, synthetic fibers and/or glass fibers, a mixture thereof, and/or a mixture with textile wicks consisting of natural fibers, synthetic fibers and/or glass fibers.

6. The capillary plant (10) according to Claim 5, **characterized in that** the organic and/or inorganic substrate (28) has a particle size in a range from 0.2 to 20 mm, preferably in a range from 1 to 20 mm, more preferably in a range from 1 to 10 mm, most preferably in a range from 2 to 8 mm.

7. The capillary plant (10) according to any one of the preceding claims, **characterized in that** the organic and/or inorganic substrate (28) has riparian plants and/or marsh plants, preferably cane brake plants, sedges and/or rush plants, more preferably rush.

8. A sewage treatment plant, **characterized in that** the sewage treatment plant has at least one capillary plant (10) according to any one of Claims 1 to 7.

9. The sewage treatment plant according to Claim 8, **characterized in that** the sewage treatment plant has a drainless collecting pit (40) for domestic sewage and/or a SBR system (42), a means (50) for composting the thick matter, preferably a thermo-composter, and a capillary plant (10) according to any one of Claims 1 to 7, wherein the drainless collecting pit (40) and/or the SBR basin (44) of the SBR system (42) is/are the water reservoir (12) of the capillary plant (10).

10. A method for the purification and hygienization of water, sewage, purified sewage and/or rain water, **characterized in that**
the water, sewage, purified sewage and/or rain water is/are caught and collected, optionally prepurified mechanically and/or biologically,
fed into the water reservoir (12) of a capillary plant (10) according to any one of Claims 1 to 7,
and transferred into the watertight trough (14) of the capillary plant (10),
wherein the water, sewage, purified sewage and/or rain water rise/s in the watertight trough (14) in the ground matrix by means of capillary action and is/are discharged in the form of purified water vapor to the ambient air and/or in the form of moisture to the surrounding soil or to the further watertight trough (15), for the purpose of horizontal and vertical seepage in the ground matrix, or is/are used for the irrigation of plants or as industrial water.

11. The method according to Claim 10, **characterized in that** the watertight trough (14) of the capillary plant (10) is fed with sewage, purified sewage and/or rain water continuously or at intervals.

## Revendications

1. Installation capillaire (10), comprenant
- au moins un réservoir d'eau (12),
- au moins une cuve (14) imperméable à l'eau de hauteur (H), comprenant un fond (16) de cuve, une paroi latérale (18) continue et une ouverture (20), ladite ouverture (20) formant une surface opposée au fond (16) de cuve et étant délimitée par le bord de la paroi latérale (18) continue opposé au fond (16) de cuve, et la hauteur (H) s'étendant du fond (16) de cuve jusqu'à l'ouverture (20),
- au moins une conduite d'alimentation en eau (22) comportant un moyen (24) pour la génération et/ou la conservation d'une amenée d'eau depuis le ou les réservoirs d'eau (12) vers la ou les cuves (14) imperméables à l'eau, un espacement (D2) entre la conduite d'alimentation en eau (22) et le fond (16) de cuve représentant au maximum 1/3 de la hauteur (H) de la cuve (14) imperméable à l'eau,
- au moins une protection anti-débordement (26), ladite protection anti-débordement (26) reliant de manière étanche la ou les cuves (14) imperméables à l'eau au ou aux réservoirs d'eau (12), et
- au moins un substrat (28) organique et/ou inorganique, disposé dans la ou les cuves (14) imperméables à l'eau et ayant une action capillaire, **caractérisée en ce que** ladite installation capillaire (10) peut être mise en place dans le sol (36) de telle manière que le fond (16) de cuve soit opposé au niveau de surface (38) du sol (36) et que l'ouverture (20) soit située entre le fond (16) de cuve et le niveau de surface (38), et que l'espacement (D1) entre le fond (16) de cuve et le niveau de surface (38) soit égal ou supérieur à la hauteur (H) de la cuve (14) imperméable à l'eau, que l'installation capillaire (10) comporte une autre cuve (15) imperméable à l'eau avec un fond (17) de cuve, au moins une paroi latérale (19) continue et une ouverture (21), ladite ouverture (21) formant une surface opposée au fond (17) de cuve et étant délimitée par le bord de la ou des parois latérales (19) continues opposé au fond (17) de cuve, le volume de l'autre cuve (15) imperméable à l'eau étant supérieur au volume de la cuve (14) imperméable à l'eau et l'autre cuve (15) imperméable à l'eau pouvant être mise en place dans le sol (36) de telle manière que la cuve (14) imperméable à l'eau soit disposée dans l'autre cuve (15) imperméable à l'eau et que les ouvertures (20, 21) soient positionnées au niveau de la surface (38), et **en ce que** la cuve (15) imperméable à l'eau supplémentaire comporte un écoulement (27) obturable, ledit écoulement (27) reliant de manière étanche la cuve (15) imperméable à l'eau supplémentaire au réservoir d'eau (12) et/ou à un puisard et/ou à un regard (29).

2. Installation capillaire (10) selon la revendication 1, **caractérisée en ce que** la conduite d'alimentation en eau (22) est un tuyau de drainage (30) disposé parallèlement au fond (16) de cuve.

3. Installation capillaire (10) selon la revendication 2, **caractérisée en ce que** le tuyau de drainage (30) comporte au moins un aérateur et/ou un purgeur d'air (32) disposé de préférence perpendiculairement au tuyau de drainage (30).

4. Installation capillaire selon l'une des revendications précédentes, **caractérisée en ce que** la hauteur (H) de la cuve (14) est comprise entre 0,1 et 3 m, préférentiellement entre 0,5 et 1,5 m.

5. Installation capillaire (10) selon la revendication 1, **caractérisée en ce que** le substrat (28) organique et/ou inorganique est formé par du sable, des cailloux, du gravier, de l'argile, de l'argile expansée, de la lave, des treillis textiles tissés en fibres naturelles, fibres synthétiques et/ou fibres de verre, un mélange de celles-ci et/ou un mélange avec des mèches textiles composées de fibres naturelles, de fibres synthétiques et/ou de fibres de verre.

6. Installation capillaire (10) selon la revendication 5, **caractérisée en ce que** le substrat (28) organique et/ou inorganique présente une granulométrie comprise entre 0,2 et 20 mm, de préférence entre 1 et 20 mm, encore plus préférentiellement entre 1 et 10 mm, et le plus préférablement entre 2 et 8 mm.

7. Installation capillaire (10) selon l'une des revendications précédentes, **caractérisée en ce que** le substrat (28) organique et/ou inorganique comporte des plantes de berges et/ou des plantes de marais, préférentiellement des plantes de roselières, des cypéracées et/ou des joncacées, et encore plus préférentiellement des joncs.

8. Station d'épuration des eaux usées, **caractérisée en ce que** ladite station d'épuration des eaux usées comprend au moins une installation capillaire (10) selon l'une des revendications 1 à 7.

9. Station d'épuration des eaux usées selon la revendication 8, **caractérisée en ce que** ladite station d'épuration des eaux usées comprend un puisard (40) sans écoulement pour des eaux usées domestiques et/ou un système SBR (42), un moyen (50) de compostage des matières épaisses, préférentiellement un composteur thermique, et une installation capillaire (10) selon l'une des revendications 1 à 7, le puisard (40) sans écoulement et/ou le bassin SBR (44) du système SBR (42) étant le réservoir d'eau (12) de l'installation capillaire (10).

10. Procédé de purification et d'hygiénisation d'eau, d'eaux usées, d'effluents d'épuration et/ou d'eaux de pluie, **caractérisé en ce que**
l'eau, les eaux usées, les effluents d'épuration et/ou les eaux de pluie sont recueillis et collectés, facultativement pré-purifiés mécaniquement et/ou biologiquement, conduits vers le réservoir d'eau (12) d'une installation capillaire (10) selon l'une des revendications 1 à 7,
et transférés vers la cuve (14) imperméable à l'eau de l'installation capillaire (10),
l'eau, les eaux usées, les effluents d'épuration et/ou les eaux de pluie montant dans la cuve (14) imperméable à l'eau sous l'action des forces capillaires dans la matrice du sol, et étant évacués comme vapeur d'eau purifiée dans l'air ambiant et/ou comme humidité dans le sol environnant ou dans l'autre cuve (15) imperméable à l'eau, pour une infiltration horizontale et verticale dans la matrice du sol, ou étant utilisés pour l'irrigation de plantes ou comme eau sanitaire.

11. Procédé selon la revendication 10, **caractérisé en ce que** la cuve (14) imperméable à l'eau de l'installation capillaire (10) est chargée de manière continue ou par intervalles en eaux usées, en effluents d'épuration et/ou en eaux de pluie.
